# EUROPEAN PATENT SPECIFICATION

(11) **EP 4 359 185 B1**
(45) Date of publication and mention of the grant of the patent: **23.07.2025**
(21) Application number: 22738001.1
(22) Date of filing: 17.06.2022
(51) Int. Cl.: B29B 17/00, B29B 17/04, B29K 509/00, B29L 9/00

(54) **COMPOSITE MATERIAL MADE FROM PLASTIC SUBSTANCES, FOR DRAINAGE AND FILLING AT A LANDFILL SITE**
VERBUNDMATERIAL AUS KUNSTSTOFFSUBSTRATEN ZUR ENTWÄSSERUNG UND FÜLLUNG AN EINER DEPONIE
MATÉRIAU COMPOSITE EN MATIÈRES PLASTIQUES DESTINÉ AU DRAINAGE ET AU REMPLISSAGE AU NIVEAU D'UN SITE DE DÉCHARGE

(30) Priority: 21.06.2021 IT 202100016214
(43) Date of publication of application: 01.05.2024
(73) Proprietor: Zero3 Key S.R.L., 40037 Sasso Marconi (BO) (IT)
(72) Inventor: ANTONINI, Marco, 48018 Faenza RA (IT); SANDRINI, Francesca, 48018 Faenza RA (IT)
(74) Representative: Perani & Partners S.p.A.
(86) International application number: PCT/IB2022/055638
(87) International publication number: WO 2022/269434

(56) References cited:
- EP-A1- 1 354 681
- WO-A1-02/090288
- WO-A1-2017/182096
- WO-A2-2011/135388
- US-A- 4 427 818
- US-A- 4 997 609
- US-A1- 2007 212 531

## Description

### FIELD OF THE INVENTION

The invention relates to the field of inert materials for drainage and filling at the landfill site, aimed at biogas and leachate collection from the mass of waste.

### BACKGROUND OF THE INVENTION

Very often in the past, the "hazard" of a landfill has been deemed to be proportional to its ability to percolate sewage (leachate) into the soil, with less importance being given to the effect of biogas emissions. More recently, biogas collection and treatment has been considered in response to different urges: on the one hand the hazards of biogas and on the other its energy potential.

This variety of urges has promoted interest in biogas collection issues, thereby leading to the development of regulations aimed at reducing and controlling biomass emissions. Thus, a new approach to landfill design has been developed, with a view to enhanced control of biogas production and maximized collection (Enrico Magnano *(2010). Biogas da discarica.* EPC libri, Roma, p. 496).

Environmental impacts of landfill management can be divided into small-scale and large-scale impacts.

The effects of the first type of impacts are felt in the vicinity of the landfill (up to a few kilometers away) and create the greatest problems of acceptance by the surrounding population due to the emission of malodorous compounds.

On the other hand, large-scale impacts are mainly linked to the decisive contribution of biogas to the greenhouse effect, due to the release of CO₂ and in particular CH₄ into the atmosphere. Leaving aside the issue of the greenhouse effect, in which several competing mechanisms are involved, biogas production at landfills causes a number of problems, including olfactory impact; the risks of fire and explosion,
the risks of asphyxiation, the risks of intoxication, phytotoxicity, and the synergy of all these effects (https://www.zero3.cloud/en/problems-represented-by-landfill-biogas-in-terms-of-environmental-impact/).

In view of the above, it will be apparent that a modern landfill site cannot ignore the problems of biogas collection and management, with a view to at least minimizing emissions; enabling recovery of a renewable energy source; ensuring safe landfill conditions by controlling flammability of the biogas mixture.

In addition to biogas, the operation of a landfill also requires implementation of appropriate underground drainage work to prevent the leachate percolation into groundwater.

Legislative Decree no.. 36/2003 consolidated on 13/10/2020, concerning the management of landfills, provides (section. 2(m) the most recent definition of leachate as "*any liquid mainly originating from water infiltration into the waste mass or from its decomposition, and emitted from or contained within a landfill*".

The landfill may be somewhat deemed to be a biological reactor in which reactions occur and produce a gas mixture (biogas, composed of 55% methane and 45% carbon dioxide) and a liquid mixture (leachate, composed of a high load of elements that can be deemed to be nutrients such as nitrogen and phosphorus, but also salts, hydrocarbons and heavy metals) (Eva Micheli (2006). *Prove di fertirrigazione con percolato da discarica pretrattato con un sistema di bio-stabilizzazione aerobico.* Facoltà di Scienze Matematiche, Fisiche e Naturali, Università degli studi di Pisa).

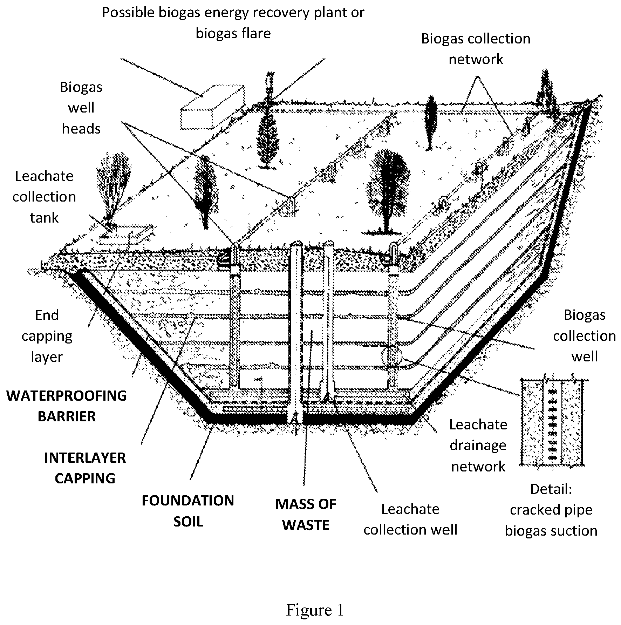

Biogas and leachate collection and management systems form an integral part of the design of the landfill. Referring to Figure 1, which schematically represents the section of a general facility, the following building blocks can be identified at any landfill site:
a) Foundation soil and sub-base of the landfill
b) Waterproofing barrier on the bottom and at the sides
c) Leachate drainage system (receiving well, collection network, collection tank)
d) Layered mass of waste
e) Interlayer capping
f) Biogas collection system (well heads, any facility, collection network, collection well)
g) End capping.

The most widely used biogas collection systems in today's landfills include the so-called vertical collection wells. In most cases, wells are dry drilled once the landfill has been closed, with varying diameters (typically from a minimum of 0,3 m up to a maximum of 1 m). The well is filled with a draining material (typically gravel), while the upper end section is sealed with waterproofing material. A cracked collection tube configured for biogas collection is placed inside the well and biogas is collected without being released into the atmosphere due to the high percentage of CH₄ (high greenhouse gases). Due to its high heat value, it is usually sent to a CHP plant or combustion flare.

Another type of a collection net is a horizontal collection systems, which do not hinder daily waste disposal operations and are therefore suitable for biogas collection from the earliest life stages of a landfill.

Vertical collection wells often integrate two landfill requirements: biogas collection and leachate management, which also fall under the above class of leachate drainage systems (c): water from rainfall and waste moisture, once saturation in the waste has been reached, which is not eliminated by evapotranspiration or surface runoff, starts to produce leachate which must be disposed of.

Leachate drainage systems typically include the following:
- Drainage layer placed at the bottom of the landfill: it is useful to collect and direct the leachate into the collectors; in the most customary practice, the draining material is gravel. As an alternative to the natural material, the drainage layer can be formed by geonets. This layer is generally located above the barrier layer for bottom and side waterproofing (b).
- Pipe system: housed within the drainage layer, they allow leachate collection and quick removal of leachate from the landfill. Pipes are generally cracked HDPE pipes.
- Vertical drainage system: it extends over the entire height of the deposit and serve as preferred routes for leachate movement from the layers of overlying waste to the bottom of the landfill. The drainage system is completed by upright wells consisting of a side liner and filled with drainage material (gravel) in which a rigid, cracked polyethylene pipe is inserted, for simultaneous biogas collection.
- End collection wells: the leachate from the drainage layers is delivered to dedicated collection wells, from which it is removed by gravity or pumping. (Filippo Dal Pastro *(2011). Landfill biogas capture: Biogas analysis and optimal plant selection.* Department of principles and plants of Chemical Engineering, Università degli studi di Padova).

The collected leachate may be conveyed into a decanting tank and then sent for treatment to a sewage treatment plant, which may be internal or external to the landfill body.

It shall be understood from the information that have been given so far, gravel - as a drainage material - is a very important and widely used element in landfills. The most commonly used type of gravel is the so-called "*quarry gravel*", a virgin material that must have (for landfill purposes) a low percentage content of carbonates, limestones, dolomites, evaporites or vitriol stones.

D1 (WO02090288 A1) describes a composition comprising a matrix of solid particles embedded in a binder, wherein the binder is present in an amount comprised between 1 and 50% by weight of the total weight of the composition (w/w) and comprises at least one thermoplastic synthetic polymer. The solid particles are preferably a combination of aggregate (sized between 2-32 mm), filler (sized up to 0.063 mm) and sand (sized between 0.063 and 2 mm); the concentration of the solid particles exemplified in D1 is on average greater than 50% by weight of the weight of the composition (w/w).

D2 (US4427818 A) describes a thermoplastic polymer concrete building block comprising 25% by weight acrylonitrile butadiene styrene (ABS), 25% by weight LDPE, 25% by weight HDPE, and 25% by weight sand. According to an alternative embodiment, the building block comprises 33% ABS, 33% sand, 33% polyethylene.

D3 (EP1354681 A1) describes a moulded product containing at least 30% by weight of a thermoplastic component, and at least 5% by weight of a particulate filler material, which includes sand.

D4 (US4997609 A) describes a 1:1 mixture by weight of granulated thermoplastic waste materials and sand superficially coated with sugar (sucrose) in an amount between 0.05% and 5.0% by weight.

D5 (WO2017182096 A1) discloses a sleeper for use in track superstructures, which is formed of a mixture of plastic granules, particularly polypropylene (PP) and polyethylene (PE, in particular HDPE), and sand in an amount of 55% by weight.

D6 (WO2011135388 A2) discloses building products, in particular roofing tiles, concrete products, and floor tiles, comprising 26-32% by mass of plastic waste material, in particular thermoplastic waste materials, granulated or shredded, and 64.5-72% by mass of sand.

### Problem of the prior art

Gravel is an expensive material that has a significant economic impact on the overall landfill management it has to be extracted from quarries of silica aggregates and then carried to the facility, using significant resources by the operators.

The choice of a gravel suitable for landfill mining and management is not to be underestimated: the selection of an excessively calcareous material may lead to gravel cementation, resulting in loss of drainage capacity.

In addition, gravel is a virgin material that is naturally formed through a long process resulting from compact rock breaking; then the fragments formed thereby undergo a mechanical abrasive action by water and ice, resulting in rounding of corners and edges. Gravel is also a highly demanded material, and is also used in other industrial applications, such as asphalt and concrete construction; beach nourishment; porous asphalt; aggregates for prefabricated buildings; and aggregates for land remediation.

This is an obstacle to proper and smooth landfill management, as well as to the achievement of circular economy goals.

### SUMMARY OF THE INVENTION

Now, the Applicant has identified a composition to form a composite material that can partially or totally replace the common *quarry gravel* as currently used in landfills.

Therefore, the present invention relates to a composite material used for drainage and filling at a landfill site, comprising:
a) a thermoplastic material at a concentration from 65% to 83% (w/w);
b) a multilayer laminated plastic material at a concentration from 2% to 20% (w/w);
c) sand at a concentration from 16% to 26% (w/w).

The invention further relates to a process for the manufacture of the composite material and the uses for which the composite material is intended.

### Benefits of the invention

Non-reusable or non-recyclable plastic materials may still be employed in landfill environments instead of "*quarry gravel*" raw material, which is now used for the drainage of biogas and leachate through the waste mass.

This solution is suggested as an equivalent alternative to currently used natural gravel, in terms of efficiency.

It should be noted that the composite material has a draining effect not because of the porosity of the material, but because of the gaps created by the disordered arrangement of the various pieces of the material at landfill sites.

The composite material of the invention provides the following benefits:
- it has a lower cost;
- it allows recycling of plastic materials, which are thus granted a second useful life. Such re-employment shall support landfill managers in a circular economy perspective;
- it allows manufacturing facilities to be built close to the points of use, where the raw material (plastic) is directly selectable. This ensures that the raw material (gravel) will not travel along long routes for provisioning;
- the use of gravel at landfill sites may be reduced or eliminated, with cost advantages as well as the preservation of virgin raw material.

### DESCRIPTION OF THE FIGURES

Figure 1: section of a common landfill, showing the various functional layers of the landfill, as well as biogas and leachate collection systems.

### DETAILED DESCRIPTION OF THE INVENTION

### Definitions

The following definitions are useful for interpreting the text for the purposes of the invention.

*A landfill* or *landfill site* preferably refers to a landfill for special non-hazardous waste.

A *composite material* refers to a system composed of two or more heterogeneous phases, which may be identified as a continuous phase, or "matrix", and a discontinuous, dispersed phase.

A *thermoplastic material* refers to a plastic material that reacts to heat by softening becoming malleable, which allows it to be modeled to form finished products. When cooled, the thermoplastic material becomes rigid again and, if pure, the softening and cooling process may be repeated several times without any change in material properties.

A *virgin plastic or plastic material* refers to a polymer directly obtained from a petrochemical raw material, such as natural gas or crude oil, which has never been used before.

A *softening point or temperature* refers to the thermodynamic state at which a material that does not have a defined melting point (such as a plastic material) begins to change its aggregation state from solid to fluid.

A *multilayer laminated plastic* material refers to a composite material comprising a plurality of overlapping layers, such layers being made of heteropolymer plastics such as polyolefins and polyesters or derivatives thereof. For example, polymers commonly used to make multilayer laminates are polyethylene (PE), ethyl vinyl alcohol (EVOH), polyethylene terephthalate (PET). Multilayer laminated plastic materials sometimes include intermediate layers with the function of adhesives or binders (such as ethylene vinyl acetate (EVA) layers); barriers (such as metallization or EVOH layers); dyes (such as TiO₂ -based layers). The intermediate layers only constitute a small part of the total weight of the composite material, typically < 1% by weight. As such, multilayer coupled plastics are not easily recycled, due to the lack of easy-to-use technologies for post-industrial deconstruction of multilayer into "pure" separately recyclable polymers. A multilayer laminated plastic material generally has the form of a film of varying thickness (15-500 µm). By way of example and without limitation, multilayer laminated plastic materials are typically used in the food industry to form packages or bags.

*Sand* refers to a loose clastic sedimentary rock, resulting from the erosion of other rocks, including sandstone (sedimentary rock).

*Drainage* refers to a multilayered element of a landfill site, comprising at least one drainage layer, which is used to channel leachate and biogas into the collectors (or end collection wells). The drainage layer is preferably above a waterproofing or protective layer, with the interposition of a separation layer; the purpose of the separation layer is to protect the protective layer from cutting and deformation of the drainage material itself (generally gravel).

*Filling,* at a landfill site, refers to a layer of inert material that is used to fill excavation voids, to raise the plane of an area of the soil, to equalize depressed areas, etc. In landfills, the filling may be used in the formation of biogas and leachate collection wells; in the formation of bottom and/or wall waterproofing layers; in the formation of drainage layers inside the landfill body.

*Landfill mining* refers to the deposition of successive waste and functional layers (such as drainage, cover or waterproofing layers).

A *landfill capping* refers to a multilayered element of a landfill, generally located at a surface level and used to isolate waste from the external environment; minimize water ingress; and stabilize the landfill to prevent erosion or settling.

### Composition of the composite material

In the composite material of this invention, the thermoplastic material represents the matrix or continuous phase of the system, whereas sand, and optionally, the multilayer laminated plastic material, constitute the dispersed phase.

Preferably, the composite material comprises or is made of a non-virgin thermoplastic material. In other words, the thermoplastic material comprises or consists of thermoplastic polymers otherwise intended for recycling (non-virgin), which have already been used or have been discarded by industries due to their being defective or not meeting the technical requirements for their production/use.

It shall be noted that the thermoplastic material includes or consists of one or more thermoplastic polymers, each being preferably a "pure" thermoplastic polymer, i.e. not contaminated by/ laminated with other materials (such as paper, aluminum or other plastic polymers). The reason for the purity of thermoplastic polymers is the need for these ingredients to maintain their physical properties (melting and re-solidification) at the time of use, which would otherwise be lost in case of contamination or lamination with other materials.

Preferably, the thermoplastic material comprises or consists of one or more thermoplastic polymers, preferably selected from polyethylene (PE), polyvinyl chloride (PVC), polyethylene terephthalate (PET) or polypropylene (PP).

According to a preferred embodiment, the thermoplastic material comprises or consists of a mixture of PE and at least one additional thermoplastic polymer selected from PVC, PP and PET. Preferably, PE makes up from approximately 60% to 90% by weight based on the total weight of the thermoplastic material, preferably from approximately 65% to 80% by weight, preferably from approximately 70% to 75% by weight.

Preferably, the thermoplastic material comprises or consists of a mixture of PE + PET or PE + PP, with the PE in the amounts by weight as given above.

Also preferably, the thermoplastic material is not a residue resulting from multilayer laminated plastic materials.

The thermoplastic material is contained in the composite material at concentrations from 65% to 83% (w/w), preferably from 68% to 81% (w/w), preferably from 68% to 78% (w/w/w), preferably from 70% to 75% (w/w), preferably of 70%, 71%, 72%, 73%, 74%, 75% (w/w).

The composite material comprises sand at concentrations from 16% to 26% by weight based on the total weight of the composite material. The Applicant believes that sand, from the above minimum concentration onwards, imparts rigidity and strength to the thermoplastic matrix of the inventive composite material.

Sand is preferably contained at concentrations of 16%, 17%, 18%, 19%, 20%, 21%, 22%, 23%, 24%, 25%, 26% (w/w).

It should be noted that the sand suitable for the purposes of the invention has an average diameter from 0.063 mm to 16 mm, preferably from 0.8 mm to 14 mm, preferably from 0.9 mm to 12 mm, preferably from 1 mm to 10 mm, preferably from 3 to 10 mm.

The composite material also comprises a multilayer laminated plastic material. As mentioned above, this multilayer laminated plastic material is, like sand, an element dispersed in the thermoplastic matrix.

In particular, the Applicant believes that the multilayer laminated plastic material, by remaining partially or totally immiscible with the plastic matrix, acquires the role of a reinforcing fiber, and contributes to the overall strength of the composite material.

It should be noted that the composition of the invention does not preferably comprise reinforcing agents such as metals or alloys, for example steel fibers; silica or silicates (such as mica); glass; carbon, such as carbon fibers or flakes.

When preparing the composite material, the multilayer laminated plastic material should be shredded to a larger size than that of the thermoplastic material, preferably not more than 25 mm, so that the former will impart fibrous strength to the latter.

Preferably, the composite material comprises the multilayer laminated plastic material concentrations from 2% to 20% by weight, based on the total weight of the composite material (w/w), preferably from 2% to 15% (w/w), preferably from 4% to 10% (w/w), preferably of 4%, 5%, 6%, 7%, 8%, 9%, 10% (w/w).

Preferably, the composite material shall include additional additives, which are useful to impart additional properties to the composite material of the invention.

The additives are preferably contained in the composite material of the invention at concentrations from 1,5 % to 4 % by weight based on the total weight of the composite material (w/w), preferably from 2 % to 4 % (w/w), preferably of 2, 3, 4 % (w/w).

Suitable additives for the purposes of the invention include those known to the skilled person, such as flame retardants; antioxidants; anti-UV; compatibilizers.

It should be noted that the composite material has a softening temperature (at atmospheric pressure) above 60°C and preferably below 100°C; preferably from 70°C to 95°C.

In view of the average temperatures commonly reached at a landfill site (ranging from 50°C to 60°C), the composite material will thus have suitable chemico-physical properties for use in drainage and filling at a landfill site, for the purposes of biogas and leachate collection.

In a *first embodiment*, which is not part of the present invention, the composite material preferably comprises
a) polyethylene terephthalate (PET) preferably at concentrations from 68% to 78% (w/w), preferably from 70% to 75% (w/w), preferably of 70%, 71%, 72%, 73%, 74%, 75% (w/w);
c) sand at concentrations from 18 % to 30 % (w/w), preferably from 18 % to 26 % (w/w), preferably from 20 % to 26 % (w/w), preferably of 20 %, 21 %, 22 %, 23 %, 24 %, 25 %, 26 % (w/w);
d) optionally, additives at concentrations from 1.5% to 4% (w/w), preferably from 2% to 4% (w/w), preferably of 2%, 3%, 4% (w/w).

The first embodiment is preferably characterized by a softening temperature from 80°C to 100°C, preferably from 80°C to 95°C, preferably from 85°C to 90°C, preferably of 85°, 86°, 87°, 88°, 89°, 90°C.

In a *second embodiment,* which is not part of the present invention, the composite material preferably comprises
a) polyvinyl chloride (PVC) at concentrations preferably from 68% to 78% (w/w), preferably from 70% to 75% (w/w), preferably of 70%, 71%, 72%, 73%, 74%, 75% (w/w);
(c) sand at concentrations preferably from 18 % to 30 % (w/w), preferably from 18 % to 26 % (w/w), preferably from 20 % to 26 % (w/w), preferably of 20 %, 21 %, 22 %, 23 %, 24 %, 25%, 26% (w/w);
(d) optionally, additives at concentrations preferably from 1.5% to 4% (w/w), preferably from 2% to 4% (w/w), preferably of 2%, 3%, 4% (w/w).

The second embodiment is preferably characterized by a softening temperature from 75 °C to 90 °C, preferably from 75 °C to 80 °C, preferably of 75°, 76°, 77°, 78°, 79°, 80°C..

According to a *third preferred embodiment,* the composite material according to the present invention comprises:
a) a thermoplastic material at concentrations from 65% to 83%, such thermoplastic material comprising at least PE;
b) the multilayer laminated plastic material is at a concentration from 2% to 20% (w/w);
c) the sand is at a concentration from 16% to 26% (w/w).

Still preferably, the composite material of the third embodiment of the invention preferably comprises:
a) polyethylene (PE) preferably at concentrations from 68% to 78% (w/w), preferably from 70% to 75% (w/w), preferably of 70%, 71%, 72%, 73%, 74%, 75% (w/w).
b) a multilayer laminated plastic material at concentrations preferably from 4 % to 15 % (w/w), preferably from 4 % to 10 % (w/w), preferably from 6% to 10% (w/w), preferably of 7 %, 8 %, 9 % and 10% (w/w).
c) sand at concentrations preferably from 16 % to 26 % (w/w), preferably from 16 % to 20 % (w/w), preferably of 16 %, 17 %, 18 %, 19 %, 20 % (w/w);
d) optionally, additives at concentrations preferably from 1.5% to 4% (w/w), preferably from 2% to 4% (w/w), preferably of 2%, 3%, 4% (w/w).

Preferably, the PE at the concentrations as stated under (a) of the third embodiment is combined with PP or PET to form 100% of the thermoplastic material.

Preferably, the polyethylene is preferably selected from high-density polyethylene (HDPE), low-density polyethylene (LDPE) and mixtures thereof. Preferably, polyethylene consists of a 30/70 mixture of LDPE and HDPE.

It should be noted that, the multilayer laminated plastic material preferably comprises the following layers: paper, polyethylene, aluminum, joined together by a polyethylene film. Preferably, the multilayer comprises the above-mentioned materials in the following amounts by weight: about 75% paper, about 20% polyethylene, and about 5% aluminum.

The third embodiment is preferably characterized by a softening temperature from 75 °C to 90 °C, preferably from 75 °C to 80 °C preferably of 75°, 76°, 77°, 78°, 79°, 80°C..

Preferably, the composite material is in the form of polyhedra measuring from 30 mm to 60 mm per side, preferably 30, 35, 40, 45, 50. 55, 60 mm each side, regardless of the other sides.

The composite material may be made of synthetic gravel, which is also covered by the present invention.

### Use of the composite material

The present invention also relates to the use of the composite material for drainage and filling at landfill sites, for the purpose of biogas and leachate collection.

Such drainage and filling, comprising or consisting of the composite material, are also (as such) covered by the scope of the present patent application.

Preferably, the drainage (or drainage layer) comprises at least one layer made of the composite material. According to a different embodiment, the drainage comprises a layer consisting of a mixture of composite material and common gravel.

Preferably, the drainage shall further comprise a waterproofing or protective layer, such as a geomembrane; and a separation layer, such as a geotextile (GTX). Preferably the separation layer is interposed between the composite layer and the geomembrane layer.

According to a preferred embodiment, the composite material is used for
- landfill mining,
- forming vertical wells for leachate and biogas collection;
- landfill capping.

It should be noted that the composite material acts as a filling/filler and at the same time as a drainage material in all three above-listed cases.

Optionally, the composite material is used as a filler in the formation of barrier layers for waterproofing the bottom and sides of the landfill.

Preferably, a barrier layer for waterproofing the bottom and sides of a landfill shall comprise the following layers, in the direction from the outside to the inside:
- a layer of drainage material, the drainage material being the composite material of the invention. The layer preferably has a thickness of ≥ 0,5 m;
- a layer consisting of a waterproofing geomembrane having a thickness of ≥ 2 mm, preferably made of HDPE;
- a layer of compacted mineral material having a thickness of 1 ≥ 1 m, preferably characterized by a low hydraulic conductivity (k ≤ 10⁻⁹)

In this configuration, the waste layer is placed above the waterproofing barrier layer, in contact with the drainage layer.

Preferably, the landfill capping may be a temporary or permanent cover.

Preferably, the capping shall comprise, in the direction from the outside to the inside, the following layers:
- a surface capping layer having a thickness of ≥ 1 m; the surface layer is designed to promote the development of capping plant species for environmental restoration, protection against erosion and against temperature changes. By way of example, the capping layer consists of soil or loam.
- a drainage layer comprising or consisting of the composite material of the invention. Preferably the drainage layer has a thickness of ≥ 0,5 m
- optionally, a mineral layer having a thickness of ≥ 0,5 m and preferably characterized by a low hydraulic conductivity (k ≤ 10⁻⁹). By way of example, the mineral layer consists of clay, possibly combined with bentonite.
- a leveling layer consisting of drainage material for proper installation of upper elements. Preferably, the drainage material consists of the composite material of the invention or comprises the composite material as well as common gravel.

In this configuration, the capping layer is laid above the waste, with the leveling layer is contacting the mass of waste.

The above-described capping layer may also be covered as such by the present invention.

### Composite material manufacturing process

The process for manufacturing the composite material is described below. It shall be noted that the preferred embodiments as discussed in the previous sections also apply as such to the manufacturing process as described in this section.

The process for manufacturing the composite material for drainage and filling at a landfill site comprises the steps of:
*i*) providing a combination of materials comprising
   a) a thermoplastic material at a concentration from 65% to 83% by weight based on the total weight of the combination;
   b) a multilayer laminated plastic material at a concentration from 2% to 20% by weight based on the total weight of the combination;
   c) sand at a concentration from 16% to 26% by weight based on the total weight of the combination;
*(ii)* shredding
   a) the thermoplastic material, to obtain at least one plastic granulate having a particle size of ≤ 1.8 mm. Preferably, if the thermoplastic material consists of several different thermoplastic polymers, each of them must be shredded separately from the others;
   b) separately from the thermoplastic material, the multilayer laminated plastic material, to obtain plastic flakes with side dimensions ≤ 25 mm;
*iii*) mixing the at least one plastic granulate with the sand and with the plastic flakes, to obtain a composite mixture;
*iv*) heating the composite mixture to the softening temperature;
*v*) introducing the softened composite mixture into molds and pressing it with a force ranging from 10 to 20 bar to obtain a composite material;
*vi*) cooling the composite material to a temperature below 40°C and removing it from the molds.

The shredding step should be carried out separately on each material involved in the manufacturing process. In other words, the thermoplastic material and any multilayer laminated plastic materials must be shredded separately from each other.

Preferably, the plastic granulate has a particle size of ≤ 1,8 mm, preferably from 0,5 to 1.8 mm.

Preferably, the plastic sheet has a side dimension of ≤ 25 mm, preferably from 10 to 25 mm.

Preferably, the step of introducing of the composite mixture into the molds (v) is carried out using polyhedral molds adapted to produce synthetic polyhedra preferably having a side from 30 mm to 60 mm, preferably 30, 35, 40, 45, 50, 55, 60 mm.

Preferably, the step of heating (*iv*) the composite mixture includes heating to a temperature below 100°C, and preferably above 60°C. The step of heating (iv) is preferably conducted at a temperature from 70°C to 90°C.

Preferably, the step of cooling (*vi*) is conducted by placing the composite material in water cooling tanks, to achieve the necessary hardening effect. Cooling is important for the material to maintain stability performance.

Preferably, when the temperature of the composite material is below 35°C, it should be removed from the tanks and placed in a storage place.

The cooled composite material can be handled by means of loaders or power shovels and stored in areas specially intended for storage and subsequent loaded on means of transport.

### EXAMPLES

The following are illustrative and non-limiting examples of the composite material of the invention.

### Example 1

### Composition of the composite material

Polyethylene (mixture of LDPE and HDPE in a 30/70 ratio) at a concentration of 71%;
Sand at a concentration of 16%;
Multilayer laminated plastic material (75% paper, 20% polyethylene and 5%of aluminum by weight, joined together by a polyethylene film) at a concentration of about 10%;
Additives at a concentration of about 3%.

### Manufacturing process

(i) providing a mixture comprising the materials of the Example 1
(ii) shredding
   a) polyethylene (mixture of LDPE and HDPE) with a particle size of about 1.5 mm to obtain the plastic granulate;
   b) the multilayer laminated plastic material with a particle size of about 25 mm to obtain the plastic sheets;
(iii) mixing the plastic granulate with sand and the plastic sheets to obtain a composite mixture; the materials shall be mixed for as long as required for the whole mixture to achieve isotropic characteristics (homogenization);
iv) heating the composite mixture to the softening temperature of 90°C;
v) introducing the softened composite mixture into molds and pressing it with a force of about 12 bar to obtain a composite material;
vi) cooling the composite material to a temperature below 35°C and removing it from the molds.

The composite material is obtained in the form of an irregular polyhedral granulate, with a size of approximately 30-60 mm per side.

### Example 2 (Comparative)

### Composition of the composite material

PVC at a concentration of 70%;
Sand at a concentration of about 26%;
Additives at a concentration of about 4%.

### Manufacturing process

(i) providing a mixture comprising the materials of the Example 2
(ii) shredding
   a) PVC with a particle size of about 1.5 mm to obtain the plastic granulate;
(iii) mixing the plastic granulate with sand to obtain a composite mixture; the materials shall be mixed for as long as required for the whole mixture to achieve isotropic characteristics (homogenization);
iv) heating the composite mixture to the softening temperature of 75-80°C;
v) introducing the softened composite mixture into molds and pressing it with a force of about 15 bar to obtain a composite material;
vi) cooling the composite material to a temperature below 35°C and removing it from the molds.

The composite material is obtained in the form of an irregular polyhedral granulate, with a size of approximately 30-60 mm per side.

### Example 3 (Comparative)

### Composition of the composite material

PET at a concentration of 70%;
Sand at a concentration of about 26%;
Additives at a concentration of about 4%.

### Manufacturing process

(i) providing a mixture comprising the materials of the Example 3
(ii) shredding
   a) PET with a particle size of about 1.5 mm to obtain the plastic granulate;
(iii) mixing the plastic granulate with sand to obtain a composite mixture; the materials shall be mixed for as long as required for the whole mixture to achieve isotropic characteristics (homogenization);
iv) heating the composite mixture to the softening temperature of 75-80°C;
v) introducing the softened composite mixture into molds and pressing it with a force of about 13 bar to obtain a composite material;
*vi*) cooling the composite material to a temperature below 35°C and removing it from the molds.

The composite material is obtained in the form of an irregular polyhedral granulate, with a size of approximately 30-60 mm per side.

## Claims

1. A composite material for drainage and filling at a landfill site, comprising:
a) a thermoplastic material at a concentration from 65% to 83%;
b) a multilayer laminated plastic material at a concentration from 2% to 20%;
c) sand at a concentration from 16% to 26% by weight based on the total weight of the composite material.

2. The composite material according to claim 1, wherein the thermoplastic material is a non-virgin plastic material.

3. The composite material according to claim 1 or 2, wherein the thermoplastic material comprises or consists of polyethylene (PE), polyvinyl chloride (PVC), polyethylene terephthalate (PET), polypropylene (PP), or mixtures thereof.

4. The composite material according to any one of claims 1 to 3, wherein:
a) the thermoplastic material comprises polyethylene (PE);
b) the multilayer laminated plastic material is at a concentration from 4% to 15%;
c) the sand is at a concentration from 16% to 26% by weight based on the total weight of the composite material.

5. The composite material according to any one of claims 1 to 4, wherein the sand has an average diameter ranging from 0.063 mm to 16 mm.

6. The composite material according to any one of claims 1 to 5, having a softening temperature above 60°C.

7. The composite material according to any one of claims 1 to 6, in the form of polyhedrons whose size ranges from 30 mm to 60 mm for each side.

8. Gravel for drainage and filling at a landfill site, consisting of or comprising the composite material according to any one of claims 1 to 7.

9. A process for the manufacture of a composite material for drainage and filling at a landfill site comprising the steps of:
*i*) providing a combination of materials comprising
a) a thermoplastic material at a concentration from 65% to 83% by weight based on the total weight of the combination;
b) a multilayer laminated plastic material at a concentration from 2% to 20% by weight based on the total weight of the combination;
c) sand at a concentration from 16% to 26% by weight based on the total weight of the combination;
*ii*) shredding
a) the thermoplastic material, to obtain a plastic granulate having a particle size ≤ 1.8 mm;
b) separately from the thermoplastic material, the multilayer laminated plastic material, to obtain plastic flakes with side dimensions ≤ 25 mm;
*iii*) mixing the plastic granulate with the sand and with the plastic flakes, to obtain a composite mixture;
*iv*) heating the composite mixture to the softening temperature;
*v*) introducing the softened composite mixture into molds and pressing it with a force ranging from 10 to 20 bar to obtain a composite material;
*vi*) cooling the composite material to a temperature below 40°C and removing it from the molds.

10. The process according to claim 9, wherein the softening temperature of the composite mixture is below 100°C.

11. A use of the composite material according to any one of claims 1 to 7, for drainage and filling at a landfill site.

12. The use according to claim 11 in the landfill site management steps of:
- landfill mining;
- forming vertical wells for the leachate and biogas collection;
- landfill capping.

## Patentansprüche

1. Verbundmaterial zur Entwässerung und Auffüllung an einer Mülldeponie, umfassend:
a) ein thermoplastisches Material in einer Konzentration von 65 % bis 83 %;
b) ein mehrschichtiges laminiertes Kunststoffmaterial in einer Konzentration von 2 % bis 20 %;
c) Sand in einer Konzentration von 16 bis 26 Gew.- %, bezogen auf das Gesamtgewicht des Verbundmaterials.

2. Verbundmaterial nach Anspruch 1, wobei es sich bei dem thermoplastischen Material um kein neues Kunststoffmaterial handelt.

3. Verbundmaterial nach Anspruch 1 oder 2, wobei das thermoplastische Material Polyethylen (PE), Polyvinylchlorid (PVC), Polyethylenterephthalat (PET), Polypropylen (PP) oder Mischungen davon umfasst oder daraus besteht.

4. Verbundmaterial nach einem der Ansprüche 1 bis 3, wobei:
a) das thermoplastische Material Polyethylen (PE) umfasst;
b) das mehrschichtige laminierte Kunststoffmaterial in einer Konzentration von 4 % bis 15 % vorliegt;
c) der Sand in einer Konzentration von 16 bis 26 Gew.- %, bezogen auf das Gesamtgewicht des Verbundmaterials, vorliegt.

5. Verbundmaterial nach einem der Ansprüche 1 bis 4, wobei der Sand einen durchschnittlichen Durchmesser im Bereich von 0,063 mm bis 16 mm aufweist.

6. Verbundmaterial nach einem der Ansprüche 1 bis 5, das eine Erweichungstemperatur über 60 °C aufweist.

7. Verbundmaterial nach einem der Ansprüche 1 bis 6 in Form von Polyedern, deren Größe zwischen 30 mm und 60 mm je Seite liegt.

8. Kies zur Entwässerung und Auffüllung an einer Mülldeponie, bestehend aus oder umfassend das Verbundmaterial nach einem der Ansprüche 1 bis 7.

9. Verfahren zur Herstellung eines Verbundmaterials zur Entwässerung und Auffüllung an einer Mülldeponie, das folgende Schritte umfasst:
i) Bereitstellen einer Kombination von Materialien, die Folgendes umfasst
a) ein thermoplastisches Material in einer Konzentration von 65 bis 83 Gew.-%, bezogen auf das Gesamtgewicht der Kombination;
b) ein mehrschichtiges laminiertes Kunststoffmaterial in einer Konzentration von 2 bis 20 Gew.- %, bezogen auf das Gesamtgewicht der Kombination;
c) Sand in einer Konzentration von 16 bis 26 Gew.- %, bezogen auf das Gesamtgewicht der Kombination;
ii) Zerkleinern
a) des thermoplastischen Materials, um ein Kunststoffgranulat mit einer Partikelgröße ≤ 1,8 mm zu erhalten;
b) getrennt vom thermoplastischen Material des mehrschichtigen laminierten Kunststoffmaterials, um Kunststoffflocken mit Seitenabmessungen ≤ 25 mm zu erhalten;
iii) Mischen des Kunststoffgranulats mit dem Sand und mit den Kunststoffflocken, um eine Verbundmischung zu erhalten;
iv) Erhitzen der Verbundmischung auf die Erweichungstemperatur;
v) Einbringen der erweichten Verbundmischung in Formen und deren Pressen mit einer Kraft im Bereich von 10 bis 20 bar, um ein Verbundmaterial zu erhalten;
vi) Abkühlen des Verbundmaterials auf eine Temperatur unter 40 °C und deren Entfernen aus den Formen.

10. Verfahren nach Anspruch 9, wobei die Erweichungstemperatur der Verbundmischung unter 100 °C liegt.

11. Verwendung des Verbundmaterials nach einem der Ansprüche 1 bis 7 zur Entwässerung und Auffüllung an einer Mülldeponie.

12. Verwendung nach Anspruch 11 in den folgenden Schritten der Mülldeponieverwaltung:
- Deponierückbau;
- Bilden von vertikalen Bohrlöchern für die Sickerwasser- und Biogassammlung;
- Deponieabdichtung.

## Revendications

1. Matériau composite pour le drainage et le remplissage d'un site de décharge, comprenant
a) un matériau thermoplastique à une concentration de 65 % à 83 % ;
b) un matériau plastique stratifié multicouche à une concentration comprise entre 2 % et 20 % ;
c) du sable à une concentration de 16 % à 26 % en poids par rapport au poids total du matériau composite.

2. Matériau composite selon la revendication 1, dans lequel le matériau thermoplastique est un matériau plastique non vierge.

3. Matériau composite selon la revendication 1 ou 2, dans lequel le matériau thermoplastique comprend ou est constitué de polyéthylène (PE), de chlorure de polyvinyle (PVC), de polyéthylène téréphtalate (PET), de polypropylène (PP), ou de leurs mélanges.

4. Matériau composite selon l'une quelconque des revendications 1 à 3, dans lequel
a) le matériau thermoplastique comprend du polyéthylène (PE) ;
b) le matériau plastique stratifié multicouche a une concentration comprise entre 4 % et 15 % ;
c) le sable a une concentration comprise entre 16 % et 26 % en poids par rapport au poids total du matériau composite.

5. Matériau composite selon l'une des revendications 1 à 4, dans lequel le sable a un diamètre moyen compris entre 0,063 mm et 16 mm.

6. Matériau composite selon l'une des revendications 1 à 5, ayant une température de ramollissement supérieure à 60 °C.

7. Matériau composite selon l'une quelconque des revendications 1 à 6, sous forme de polyèdres dont la taille est comprise entre 30 mm et 60 mm pour chaque face.

8. Gravier pour le drainage et le remplissage d'un site de décharge, constitué ou comprenant le matériau composite selon l'une quelconque des revendications 1 à 7.

9. Procédé de fabrication d'un matériau composite pour le drainage et le remplissage d'un site de décharge, comprenant les étapes suivantes :
i) fournir une combinaison de matériaux comprenant
a) un matériau thermoplastique à une concentration de 65 % à 83 % en poids par rapport au poids total de la combinaison ;
b) un matériau plastique stratifié multicouche à une concentration de 2 % à 20 % en poids par rapport au poids total de la combinaison ;
c) du sable à une concentration de 16 % à 26 % en poids par rapport au poids total de la combinaison ;
ii) déchiqueter
a) le matériau thermoplastique, afin d'obtenir un granulé de plastique dont la taille des particules est ≤ 1,8 mm ;
b) séparément du matériau thermoplastique, le matériau plastique stratifiée multicouche, pour obtenir des flocons de plastique avec des dimensions latérales ≤ 25 mm ;
iii) mélanger les granulés de plastique au sable et aux flocons de plastique pour obtenir un mélange composite ;
iv) chauffer le mélange composite à la température de ramollissement ;
v) introduire le mélange composite ramolli dans des moules et le presser avec une force allant de 10 à 20 bars pour obtenir un matériau composite ;
vi) refroidir le matériau composite à une température inférieure à 40 °C et démoulage.

10. Procédé selon la revendication 9, dans lequel la température de ramollissement du mélange composite est inférieure à 100 °C.

11. Utilisation du matériau composite selon l'une des revendications 1 à 7, pour le drainage et le remplissage d'un site de décharge.

12. Utilisation selon la revendication 11 dans les étapes de gestion du site de décharge avec les étapes de :
- exploiter les décharges ;
- former des puits verticaux pour la collecte des lixiviats et du biogaz ;
- reboucher les décharges.
